# EUROPEAN PATENT SPECIFICATION

(11) **EP 0 708 036 B1**
(45) Date of publication and mention of the grant of the patent: **09.12.1998**
(21) Application number: 95203135.9
(22) Date of filing: 17.09.1993
(51) Int. Cl.: B65F 1/16, B65F 1/12, B65F 1/14

(54) **Device for collecting refuse**
Müllsammelvorrichtung
Dispositif de collecte d'ordures

(30) Priority: 17.09.1992 NL 9201615; 04.11.1992 NL 9201922
(43) Date of publication of application: 24.04.1996
(62) Divisional of application: 93922668.4
(73) Proprietor: RUTTE RECYCLING B.V., NL-1165 MK Halfweg (NL)
(72) Inventor: Rutte, Antonius, NL-2132 TB Hoofddorp (NL)
(74) Representative: Metman, Karel Johannes

(56) References cited:
- DE-U- 9 004 988
- DE-U- 9 100 695
- US-A- 1 333 051
- US-A- 3 485 408
- US-A- 4 715 498

## Description

The present invention relates to a device for collecting refuse, such as glass, paper, coarse refuse and the like, according to the preamble of claim 1.

Such device for collecting refuse is known from document US-A-1,333,051.

It is an object of the invention to provide an improved device of the type mentioned in the preamble of claim 1.

For this purpose, the device for collecting refuse according to the invention has the features of the characterizing portion of claim 1.

A possible embodiment of the device according to the invention is that which is characterized by an outer casing adapted to be built at least partially into the ground and in which the refuse container can be placed and removed again in order to be emptied.

To empty such refuse container it may for example be pulled out of the outer casing by means of a loading crane engaging a lifting lug, and may be emptied above a charging space. On behalf of this emptying operation, the refuse container may comprise a pivotable lid on its lower side, which is known per se from overground containers.

An alternative embodiment of the device according to the invention is that in which the refuse container is built stationary in the ground and in which an upper lid is provided which can be opened for opening an upwardly turned discharge opening for connection to a discharge means.

The invention will hereafter be elucidated with reference to the drawing very schematically showing a device for collecting refuse.

Fig. 1 is a vertical longitudinal section of a device for collecting refuse.

Fig. 2 shows a modification of the device of Fig. 1, which is particularly intended for moisture containing refuse.

Fig. 3 and 4 are vertical sections of a portion of a refuse container having an insert lock which is shown in two positions, constructed in accordance with the invention.

The drawings show devices for collecting refuse, in particular separated household and industrial refuse, such as glass, paper, chemical waste, GFG, textile and other refuse which is removed separately, said devices being arranged mainly alongside public roads, in particular in dwelling environments.

The refuse collecting device comprises an outer casing 1 which, in this case, is arranged partially underground and is intended to substantially receive a refuse container 2 therein. The outer casing 1 is made of steel and is anchored in the soil with an enlarged base plate 3. The outer casing 1 in this case has a circular cross section and a longitudinal shape but may also assume other shapes depending on the use. The refuse container 2 which is also cylindrical is submerged for the greater part in the outer casing 1 and has a cylindrical side wall 4, a bottom wall serving as lid 5 for opening and closing a discharge opening, and a top wall 6. A lug 7 is welded on the top wall 6 to enable a loading crane to pull the refuse container 2 out of the outer casing 1 in order to empty it. The lid is pivotally connected to the lower side of the side wall 4 by means of a pivot 8 and diametrically opposite the pivot 8 there is arranged a bolt 9 which can easily be opened. By means of said lid 5, a refuse container 2, which is hoisted out of the outer casing 1, may be emptied above the loading space of a truck by opening the lid 5.

For placing the refuse container 2 concentrically in the outer casing 1, there are arranged at least three circumferentially spaced centering cams 10 on the inner side of the side wall 4 of the refuse container 2, said cams having inclined upper sides guiding the refuse container 2 to a centered position. Then a horizontal flange 11 of the refuse container 2, which extends circumferentially near the top wall 6, rests on the upper edge of the outer casing 1 with interposition of a seal 12. A vertical circumferential edge 13 on the flange 11 causes a further protection of the seal 12 so that moisture and dirt are prevented from penetrating between the outer casing 1 and the refuse contrainer 2. In, or in this case near the top wall 6 and in the side wall 4 there are arranged one or more insert openings 14 the shape and size of which depend on the type of refuse for which the refuse container is intended. For glass the insert opening 14 will be more or less round, while the insert opening for paper will assume more the shape of a slot.

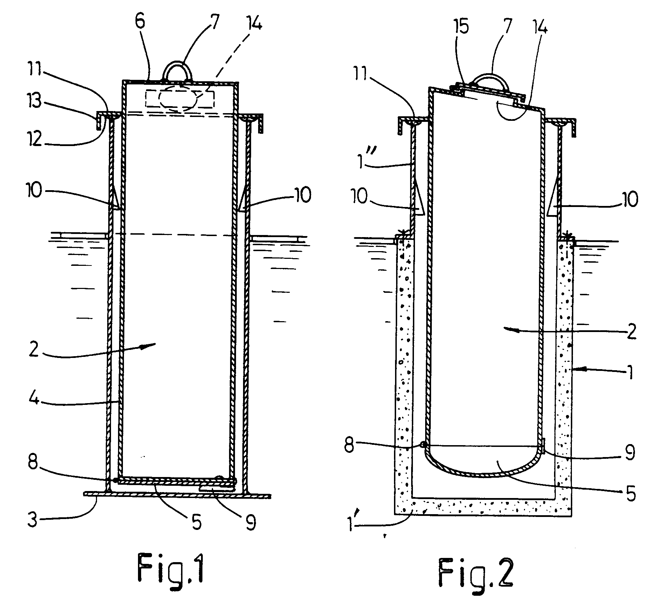

Fig. 2 shows a further device for collecting refuse, which is suited for garbage sacks or coarse refuse, for example. For this purpose, a large insert opening 14 is provided in the top wall 6 of the refuse container 2, said opening being closable by a lid 15. The lid 5 at the lower side of the refuse container 2 for emptying purpose is in this case bowl-shaped so that the division between lid 5 and the remainder of the refuse container 2 is at a distance above the bottom of the container and no danger arises that liquid which is collected on the bottom of the refuse container 2 leaks away beyond the seal of the lid 5.

In this device, the outer casing 1 is made partly of concrete and partly of steel, in which the underground portion 1' is formed from concrete on which an overground portion 1'' is attached. It is noted that such an outer casing 1 may also be used in the first device. The outer casing 1 and possibly also the refuse container 2 may also be made of plastic.

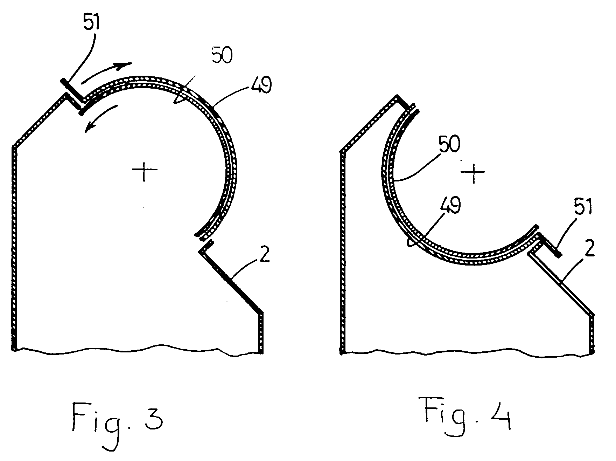

Fig. 3 and 4 show a device for collecting refuse according to the invention. This device comprises a lock or sluice including such rotating elements 49, 50 that there is never a direct communication between the interior of the refuse container 2 and the environment. For this purpose, both semi cylindrical shaped concentric rotating elements 49, 50 are connected through a reversing transmission so that, when the outer rotating element is opened through the handle 51, the other rotating element 50 rotates in opposite direction. In the position of Fig. 4, the refuse can be placed on the inner rotating element 50 and when the rotating elements 49, 50 are rotated back the refuse automatically enters the container. The fill opening is closed at all times by both rotating elements 49, 50. This fill opening or mouth is also very useful in refuse chutes in flats and the like.

In addition to the locks as shown and described, the upper side of preferably the stationary refuse container 2 may comprise a fan or other exhaust means connecting to the street sewerage or a house connection, respectively, by means of an air discharge line containing an air valve. In this way smelling air is discharged through the sewerage. The driving means of the fan or the exhaust means may be supplied by solar energy or my be connected to the main supply of the street lights, wherein the fan is switched on when the insert opening is released and is switched off again after it is closed off by a lid. This switching action of the fan may be done automatically by means of a switch.

The invention is not restricted to the embodiment shown in the drawings and described herein before, which may be varied in different manners within the scope of the invention.

## Claims

1. Device for collecting refuse, such as glass, paper, coarse refuse and the like, comprising a rigid refuse container (2) having an insert opening (14) in or near its upper wall which is closable by a closure means, **characterized** in that the closure means of the insert opening of the refuse container (2) is provided with a revolving closure means rotatable about an axis and including two semi-cylindrical concentrically rotating elements (49, 50) connected through a reversing transmission so as to rotate in opposite directions, so that in a first rotational position the semi-cylindrical elements form a receptacle allowing refuse to be placed on the inner rotating element (50) and, in a second rotational position, the elements (49, 50) are turned so as to allow the refuse to enter the container (2).

2. Device according to claim 1, comprising an outer casing (1) to be built at least partially into the ground, while the refuse container (2) is adapted to be placed in the outer casing (1) and having a hoist engagement means (7) to be lifted therefrom in order to be emptied.

3. Device according to claim 1, wherein the refuse container (2) is adapted to be built stationary into the ground.

4. Device according to claim 1, wherein the refuse container (2) includes a refuse chute adapted to be built into a block of flats or the like and with which the insert opening communicates.

5. Device according to claim 2, comprising a discharge opening in its bottom part closable by a closure means (5) constructed as a lid means which is bowl-shaped such that a division between said lid means and the overlying part of the refuse container (2) is at a distance above the bottom of the container (2) formed by said lid means.

## Patentansprüche

1. Vorrichtung zum Sammeln von Abfällen wie Glas-, Papier-, Grobabfällen und dgl., die einen starren Abfallbehälter (2) mit einer in oder nahe seiner oberen Wand vorgesehenen Einwurföffnung (14) aufweist, die mit einer Verschlußeinrichtung verschließbar ist, **dadurch gekennzeichnet**, **daß** die Verschlußeinrichtung der Einwurföffnung des Abfallbehälters (2) mit einer Drehverschlußeinrichtung versehen ist, die um eine Achse drehbar ist und zwei konzentrische, halbzylinderförmige Rotationselemente (49, 50) aufweist, die über ein Umkehrgetriebe derart verbunden sind, daß sie sich in entgegengesetzte Richtungen drehen, so daß die halbzylinderförmigen Elemente in einer ersten Drehstellung eine Aufnahme bilden, die das Positionieren von Abfall auf dem inneren Rotationselement (50) ermöglicht, und die Elemente (49, 50) in einer zweiten Drehstellung derart geschwenkt werden, daß der Abfall in den Behälter (2) gelangen kann.

2. Vorrichtung nach Anspruch 1 mit einem wenigstens teilweise in den Boden einzulassenden Außenmantel (1), wobei der Abfallbehälter (2) für eine Anordnung in dem Außenmantel (1) ausgelegt ist und eine Eingriffseinrichtung (7) für ein Hebezeug für ihr Herausheben aus dem Außenmantel (1) für das Entleeren aufweist.

3. Vorrichtung nach Anspruch 1, wobei der Abfallbehälter (2) für einen feststehenden Einbau in den Boden ausgelegt ist.

4. Vorrichtung nach Anspruch 1, wobei der Abfallbehälter (2) eine Abfallrutsche aufweist, die für den Einbau in ein Wohnhaus oder dgl. ausgelegt ist und mit der die Einwurföffnung verbunden ist.

5. Vorrichtung nach Anspruch 2, wobei diese in ihrem Bodenabschnitt eine Auslaßöffnung aufweist, die mit einer Verschlußeinrichtung (5) verschließbar ist, die als schalenförmiger Deckel ausgeführt ist, so daß eine Trennung zwischen dem Deckel und dem darüberliegenden Abschnitt des Abfallbehälters (2) in einem Abstand über dem von dem Deckel gebildeten Boden des Behälters (2) erfolgt.

## Revendications

1. Dispositif pour recueillir des déchets tels que verre, papier, gros déchets et analogue, comprenant un conteneur à déchets (2) rigide présentant une ouverture d'insertion (14) ménagée dans sa paroi supérieure ou à proximité de celle-ci, qui est obturable par un moyen de fermeture, caractérisé en ce que le moyen de fermeture de l'ouverture d'insertion du conteneur à déchets (2) est muni d'un moyen de fermeture pivotant pouvant tourner autour d'un axe et comprenant deux éléments semicylindriques tournant de façon concentrique (49, 50) reliés par l'intermédiaire d'une transmission de renvoi de manière à tourner dans des sens opposés, de sorte que dans une première position de rotation, les éléments semicylindriques forment un réceptacle permettant que des déchets soient placés sur l'élément tournant intérieur (50) et que, dans une seconde position de rotation, les éléments (49, 50) pivotent de manière à permettre aux déchets de pénétrer dans le récipient (2).

2. Dispositif selon la revendication 1, comprenant une enveloppe extérieure (1) destinée à être construite au moins en partie dans le sol, tandis que le conteneur à déchets (2) est adapté à être placé dans l'enveloppe extérieure (1) et comportant un moyen de prise pour hissage (7) afin de le soulever hors de celle-ci afin de le vider.

3. Dispositif selon la revendication 1, dans lequel le conteneur à déchets (2) est conçu pour être construit de façon stationnaire dans le sol.

4. Dispositif selon la revendication 1, dans lequel le conteneur à déchets (2) comprend un versoir à déchets conçu pour être incorporé dans un bloc d'appartements ou analogue et avec lequel l'ouverture d'insertion communique.

5. Dispositif selon la revendication 2, comprenant une ouverture de déchargement ménagée dans sa partie inférieure, obturable par un moyen de fermeture (5) conçu sous forme d'un moyen formant couvercle qui est en forme de coupe de façon telle qu'une séparation entre ledit moyen formant couvercle et la partie du conteneur à déchets (2) située au-dessus de celui-ci se trouve à distance au-dessus du fond du conteneur (2) constitué par ce moyen formant couvercle.
